# EUROPÄISCHE PATENTSCHRIFT

(11) **EP 4 185 789 B1**
(45) Veröffentlichungstag und Bekanntmachung des Hinweises auf die Patenterteilung: **07.08.2024**
(21) Anmeldenummer: 21735158.4
(22) Anmeldetag: 21.06.2021
(51) Int. Cl.: F16H 1/06, F16H 1/14

(54) **GETRIEBEMOTOR MIT GETRIEBE, WELCHES EINE EINTREIBENDE WELLE UND EIN GEHÄUSE AUFWEIST**
GEAR MOTOR WITH TRANSMISSION WHICH HAS AN INPUT SHAFT AND A HOUSING
MOTEUR RÉDUCTEUR AVEC TRANSMISSION COMPORTANT UN ARBRE D'ENTRÉE ET UN CARTER

(30) Priorität: 21.07.2020 CN 202010703811; 14.10.2020 DE 102020006314
(43) Veröffentlichungstag der Anmeldung: 31.05.2023
(73) Patentinhaber: SEW-EURODRIVE GmbH & Co. KG, 76646 Bruchsal (DE)
(72) Erfinder: QIONGHUA, Gao, Tinajin (CN)
(86) Internationale Anmeldenummer: PCT/EP2021/025220
(87) Internationale Veröffentlichungsnummer: WO 2022/017638

(56) Entgegenhaltungen:
- EP-A1- 2 653 752
- DE-B- 1 284 804
- US-A1- 2007 006 675

## Beschreibung

Die Erfindung betrifft einen Getriebemotor mit Getriebe, welches eine eintreibende Welle und ein Gehäuse aufweist.

Es ist allgemein bekannt, dass ein Getriebe eines Getriebemotors über Lager drehbar gelagerte Wellen und Verzahnungsteile aufweist.

Aus der DE 10 2013 223 283 A1 ist ein Getriebemotor des orthogonalen Typs bekannt.

**Aus der** US 2007/006675 A1 **ist als nächstliegender Stand der Technik eine Leistungsübertragungeinheit bekannt.**

**Aus der** EP 2 653 752 A1 **ist eine Baureihe von Getriebegehäusen bekannt.**

**Aus der** DE 12 84 804 B **ist ein zweiteiliges Getriebegehäuse bekannt.**

Der Erfindung liegt daher die Aufgabe zugrunde, einen Getriebemotor weiterzubilden, wobei die Herstellung des Getriebemotors kostengünstig und der Getriebemotor kompakt sein soll.

Erfindungsgemäß wird die Aufgabe bei dem Getriebemotor nach den in Anspruch 1 angegebenen Merkmalen gelöst.

Wichtige Merkmale der Erfindung bei dem Getriebemotor sind, dass der Getriebemotor mit Getriebe vorgesehen ist, welches eine eintreibende Welle und ein Gehäuse aufweist, das ein Gehäuseteil, ein Aufnahmeteil und ein Deckelteil, insbesondere sowie einen Getriebedeckel, aufweist, wobei das Gehäuse Verzahnungsteile und Öl zumindest teilweise gehäusebildend umgibt,
wobei mit der eintreibenden Welle ein Kegelritzel drehfest verbunden ist, das mit einem mit der Zwischenwelle drehfest verbundenen Rad, insbesondere Kegelrad, im Eingriff ist,
wobei ein schrägverzahntes Stirnrad mit der Zwischenwelle drehfest verbunden ist, das mit einem mit der abtreibenden Welle des Getriebes drehfest verbundenen Zahnrad, insbesondere schrägverzahntes Stirnrad, im Eingriff ist,
insbesondere wobei die Drehachse der eintreibenden Welle senkrecht zur Drehachse der Zwischenwelle ausgerichtet ist, wobei die Drehachse der Zwischenwelle parallel ausgerichtet ist zur Drehachse der abtreibenden Welle.

Von Vorteil ist dabei, dass bei der erfindungsgemäßen Kegelgetriebestufe die Drehachse der eintreibenden Welle die Drehachse des mit dem Kegelritzel im Eingriff befindlichen Rads schneidet. Im Unterschied zu Hypoidgetrieben oder anderen Winkelgetrieben sind somit nicht nur hohe Übersetzungen, sondern auch geringe Querkräfte erreichbar. Insgesamt ist also ein hochbelastbares Getriebe erreichbar, das nicht nur kostengünstig, sondern auch kompakt ausführbar ist.

Außerdem ist das Rad drehfest mit der Zwischenwelle verbunden und dabei zwischen den Lagern der Zwischenwelle angeordnet. Ebenso ist das mit der Zwischenwelle drehfest verbundene schrägverzahnte Stirnrad zwischen den Lagern der Zwischenwelle angeordnet als auch dass mit der abtreibenden Welle drehfest verbundene Zahnrad zwischen den Lagern der abtreibenden Welle angeordnet. Somit sind hohe Querkräfte aufnehmbar insbesondere im Vergleich zu einer Anordnung der Verzahnungsteile außerhalb der Lager der jeweiligen mit dem jeweiligen Verzahnungsteil verbundenen Welle.

**Erfindungsgemäß** begrenzt eine von einer in die eintreibende Welle eingeschraubten Schraube formschlüssig gehaltene Scheibe das Kegelritzel in axialer Richtung. Von Vorteil ist dabei, dass der konische Bereich am äußersten axialen Endbereich der Welle ausbildbar ist und somit das Kegelritzel derart aufsteckbar ist, dass die Stirnfläche der Welle diejenige axiale Position ist, an welcher das Kegelritzel von der Scheibe begrenzt wird.

Denn die Scheibe begrenzt das Kegelritzel an dieser axialen Position, weil die Scheibe von einer Schraube gegen die Stirnfläche der eintreibenden Welle gedrückt gehalten ist und die Scheibe in radialer Richtung übersteht, insbesondere also an der axialen Position der Stirnfläche der eintreibenden Welle.

**Erfindungsgemäß** ist das Kegelritzel auf einen konisch geformten Bereich der eintreibenden Welle aufgesteckt. Von Vorteil ist dabei, dass eine kostengünstige materialsparende Herstellung des Kegelritzels ermöglicht ist. Außerdem ist auch die konische Fläche an der eintreibenden Welle kostensparend herstellbar.

Bei einer vorteilhaften Ausgestaltung ist das Kegelritzel formschlüssig mit der eintreibenden Welle verbunden, insbesondere mittels Passfederverbindung,
und/oder
das Kegelritzel ist kraftschlüssig mit der eintreibenden Welle verbunden, insbesondere mittels Klebeverbindung. Von Vorteil ist dabei, dass ein hohes Drehmoment von der eintreibenden Welle an das Kegelritzel übertragbar ist.

Außerdem liegt das Kegelritzel an dem Innenring des ersten der beiden Lager der eintreibenden Welle an und der Außenring dieses ersten Lagers ist gegen eine Innenstufe des Aufnahmeteils angestellt, wobei der Außenring des zweiten Lagers des Aufnahmeteils gegen eine weitere Innenstufe des Aufnahmeteils ansteht und der Innenring des zweiten Lagers gegen einen Druckring angestellt ist, der von einem Klemmring kraftschlüssig gehalten ist.

Die vom Druckring eingebrachte Lagerspannung fließt also über das zweite Lager zum Aufnahmeteil und von dort zum ersten Lager, von wo er in das Kegelritzel fließt. Vom Kegelritzel fließt er über die Scheibe und über die eintreibende Welle zum Druckring zurück.

Bei einer vorteilhaften Ausgestaltung sind am Gehäuseteile Fußbereiche zum Aufstellen und Befestigen des Getriebes auf einer Bodenfläche, insbesondere auf einer an einer Maschine oder Anlage ausgebildeten Montagefläche, ausgeformt,
wobei die Bodenfläche im Wesentlichen als Ebene ausgebildet ist, wobei die Normale der Ebene parallel zur Drehachse der eintreibenden Welle und senkrecht zur Drehachse der Z wischenwelle ausgerichtet ist,
wobei die Fußbereiche und/oder die Ebene auf der von der eintreibenden Welle abgewandten Seite des mit der Zwischenwelle drehfest verbundenen Rads, insbesondere Kegelrads, angeordnet ist oder sind. Von Vorteil ist dabei, dass die eintreibende Welle vertikal ausrichtbar ist und die Zwischenwelle horizontal. Somit ist dann das Getriebe auf einer Montagefläche aufstellbar, die in Gravitationsrichtung unterhalb des Getriebes angeordnet ist.

Bei einer vorteilhaften Ausgestaltung ist die eintreibende Welle über zwei im Aufnahmeteil aufgenommene Lager drehbar gelagert, insbesondere wobei die Innenringe der beiden Lager auf die eintreibende Welle aufgesteckt sind,
wobei das Gehäuse einer Wellenendpumpe mit dem Gehäuseteil verbunden ist und eine Zwischenwelle des Getriebes mit einem drehbaren Teil der Wellenendpumpe drehfest verbunden ist, insbesondere und dieses antreibt,
wobei von der Wellenendpumpe aus dem Ölsumpf gefördertes Öl durch einen im Gehäuseteil angeordneten ersten Kanal, insbesondere durch einen im Gehäuseteil angeordneten, durch das Gehäuseteil durchgehenden, ersten Kanal, welcher in einen zweiten, durch das Aufnahmeteil durchgehenden Kanal mündet, und durch den zweiten Kanal zu dem weiter von der Zwischenwelle entfernt angeordneten Lager gelangt,
insbesondere wobei der erste Kanal aus ins Gehäuseteil eingebrachten Bohrungen gebildet ist und/oder wobei der zweite Kanal aus ins Aufnahmeteil eingebrachten Bohrungen gebildet ist.

Von Vorteil ist dabei, dass mittels einer passiven Pumpe, also einer Pumpe ohne eigene separate Leistungsversorgung, Öl förderbar ist. Denn die Pumpe benötigt keinen eigenen Elektromotor, der sie antreibt, sondern wird von der Zwischenwelle des Getriebes angetrieben. Allerdings wird bei Stillstand somit das Lager der eintreibenden Welle nicht durch von der Pumpe gefördertes Öl geschmiert. Denn die Lager der eintreibenden Welle sind oberhalb des Ölpegels, also oberhalb des Ölsumpfes, anordenbar. Auf diese Weise ist bei der Montage die in dem Aufnahmeteil mittels der Lager gelagerte eintreibende Welle als vorkomplettierte Einheit in eine Ausnehmung des Gehäuseteils einsetzbar. Dabei werden auch die Kanäle verbunden. Denn der Kanal im Aufnahmeteil und der Kanal im Gehäuseteil werden beim Verbinden des Aufnahmeteils mit dem Gehäuseteil ebenfalls miteinander verbunden.

Somit ist die vorkomplettierte Einheit mit dem Aufnahmeteil, welches die eintreibende Welle und deren Lagerung enthält, in das Gehäuseteil einführbar und danach verbindbar mittels Schrauben. Die beiden Kanäle sind dabei schon vorhanden und beim Verbinden werden die Mündungen der beiden Kanäle in Flucht gebracht, so dass die Verbindung der beiden Kanäle hergestellt ist. Zwischen dem Aufnahmeteil und dem Gehäuseteil ist eine Flachdichtung einsetzbar, so dass beim Anziehen der Schrauben das Gehäuseteil mit dem Aufnahmeteil öldicht verbunden wird.

Das Einführen der vorkomplettierten Einheit muss vorsichtig erfolgen, da beim Einführen das auf der eintreibenden Welle angeordnete und drehfest verbundene Kegelritzel mit einem Rad in Eingriff kommt, das drehfest mit der Zwischenwelle verbunden ist, welche die Wellenendpumpe antreibt und mittels weiterer Lager, die auf die Zwischenwelle aufgesteckt und im Gehäuseteil aufgenommen sind, drehbar gelagert ist.

Die Wellenendpumpe ist vorzugsweise an der Außenseite des Gehäuseteils angeordnet.

Eine Abzweigung des zweiten Kanals ist vorzugsweise mittels eines Stopfens zwar verschlossen aber nur derart, dass Öl noch durchtreten kann, also vom Stopfen am Vorbeiströmen nicht gehindert wird. Auf diese Weise ist Öl aus der Abzweigung in den axial zwischen den beiden Lagern der eintreibenden Welle angeordneten Raumberiech förderbar und somit das weiter unten angeordnete Lager der Lagerung der eintreibenden Welle mit Öl versorgbar.

Das Kegelritzel und das Rad sind zumindest teilweise unterhalb des Ölpegels angeordnet. Somit ist auch bei Stillstand Öl im Eingriffsbereich vorhanden.

Bei einer vorteilhaften Ausgestaltung ist das Gehäuse einer Wellenendpumpe mit dem Gehäuseteil verbunden und eine Zwischenwelle des Getriebes ist mit einem drehbaren Teil der Wellenendpumpe drehfest verbunden, insbesondere und dieses antreibt. Von Vorteil ist dabei, dass Öl passiv, insbesondere also ohne elektromotorisch angetriebene Pumpe, sondern durch eine durch die bei Betrieb drehende Zwischenwelle angetriebene Pumpe, förderbar ist.

Bei einer vorteilhaften Ausgestaltung gelangt von der Wellenendpumpe aus dem Ölsumpf gefördertes Öl durch einen im Gehäuseteil angeordneten ersten Kanal, insbesondere durch einen durch das Gehäuseteil durchgehenden, ersten Kanal, welcher in einen zweiten, durch das Aufnahmeteil durchgehenden Kanal mündet, und durch den zweiten Kanal zum weiter von der Zwischenwelle entfernt angeordneten Lager,
insbesondere wobei der erste Kanal aus ins Gehäuseteil eingebrachten Bohrungen gebildet ist und/oder wobei der zweite Kanal aus ins Aufnahmeteil eingebrachten Bohrungen gebildet ist. Von Vorteil ist dabei, dass eine passive Schmierung der Kegelgetriebestufe und vor allem deren Lager ermöglicht ist, auch wenn die eintreibende Welle vertikal ausgerichtet ist, also die Drehachse der eintreibenden Welle parallel zur Gravitationsrichtung ausgerichtet ist.

Bei einer vorteilhaften Ausgestaltung ist im Gehäuseteil ein dritter Kanal angeordnet, der zum ersten Kanal spiegelsymmetrisch ausgeführt ist, insbesondere zu einer Spiegelebene, welche die Drehachse der eintreibenden Welle enthält. Von Vorteil ist dabei, dass die Wellenendpumpe alternativ am anderen Ende der Zwischenwelle anordenbar ist und somit eine gleichartige Kanalstruktur vorhanden ist. Optional sind sogar an beiden Enden der Zwischenwelle jeweils eine Wellenendpumpe anordenbar. Somit ist die langsamer als die eintreibende Welle drehende Zwischenwelle trotzdem zur Förderung eines großen Ölstroms verwendbar. Denn durch die zwei, wenn auch langsamer angetriebenen Wellenendpumpen ist ein großer Ölstrom förderbar.

Bei einer vorteilhaften Ausgestaltung ist im Aufnahmeteil ein vierter Kanal angeordnet, der zum zweiten Kanal spiegelsymmetrisch ausgeführt, insbesondere zu einer Spiegelebene, welche die Drehachse der eintreibenden Welle enthält. Von Vorteil ist dabei, dass die Wellenendpumpe alternativ am anderen Ende der Zwischenwelle anordenbar ist und somit eine gleichartige Kanalstruktur vorhanden ist. Optional sind sogar an beiden Enden der Zwischenwelle jeweils eine Wellenendpumpe anordenbar. Somit ist die langsamer als die eintreibende Welle drehende Zwischenwelle trotzdem zur Förderung eines großen Ölstroms verwendbar. Denn durch die zwei, wenn auch langsamer angetriebenen Wellenendpumpen ist ein großer Ölstrom förderbar.

Bei einer vorteilhaften Ausgestaltung weist der erste Kanal eine erste, radial gerichtete, ins Gehäuseteil eingebrachte Sacklochbohrung auf, die in eine zweite, axial gerichtete ins Gehäuseteil eingebrachte, zur Umgebung mit einem Verschlussstopfen verschlossene Sacklochbohrung mündet, welche eine dritte, radial gerichtete, durch das Gehäuseteil durchgehende Bohrung kreuzt, die in eine vierte, radial gerichtete, ins Aufnahmeteil eingebrachte Bohrung mündet, die eine fünfte axial gerichtete, ins Aufnahmeteil eingebrachte Sacklochbohrung kreuzt,
insbesondere wobei die vierte Bohrung zur eintreibenden Welle hin mittels eines Stopfens nur unvollständig verschlossen und/oder öldurchlässig angeordnet ist, wobei der Stopfen in axialer Richtung zwischen den Lagern der eintreibenden Welle angeordnet ist und somit von der Wellenendpumpe gefördertes Öl aus der vierten Bohrung am Stopfen vorbei, in axialer Richtung zwischen den Lagern der eintreibenden Welle, austritt und das unterhalb der vierten Bohrung angeordnete Lager der beiden Lager der eintreibenden Welle mit Öl versorgt,
insbesondere wobei der erste Kanal einen Auslass oberhalb der Lager der eintreibenden Welle aufweist. Von Vorteil ist dabei, dass über den Auslass das obere der Lager versorgt wird und über den öldurchlässig angeordneten Stopfen das untere der Lager versorgt wird mit Öl.

Bei einer vorteilhaften Ausgestaltung der erste Kanal die erste, zweite, dritte, vierte und fünfte Bohrung umfasst. Von Vorteil ist dabei, dass eine einfache Herstellung durch Einbringen von Bohrungen ausführbar ist. Besonders vorteilhaft werden aber Sacklochbohrungen verwendet, da diese dann keinen Verschlussstopfen benötigen.

Bei einer vorteilhaften Ausgestaltung weist das Aufnahmeteil vier in Umfangsrichtung voneinander beabstandete durch das Aufnahmeteil durchgehende Radialbohrungen auf, die an derselben axialen Stelle des Aufnahmeteils angeordnet sind, insbesondere also denselben axialen Bereich überdecken. Von Vorteil ist dabei, dass einerseits zumindest eine der Bohrungen als Eintrittsöffnung für Öl fungiert und somit ÖL, das gefiltert und gefördert ist in den Zwischenraumbereich zwischen eintreibender Welle und dem Aufnahmeteil, so dass das Öl an der eintreibenden Welle entlang zu demjenigen der beiden Lager der eintreibenden Welle herunterfließt, das in Gravitationsrichtung weiter unten angeordnet ist.

Bei einer vorteilhaften Ausgestaltung ist das Getriebe mit einem Gehäuse vorgesehen, das ein Gehäuseteil aufweist, welches Verzahnungsteile und Öl zumindest teilweise gehäusebildend umgibt,
wobei
- die Wandstärke des Gehäuseteils in einem oder mehreren Bereichen des Gehäuseteils periodisch schwankt, insbesondere entlang einer geraden Richtung,
   und in dem oder den Bereichen die äußere Oberfläche glatt, insbesondere eben, ausgeführt ist
- oder dass an der der Innenseite, insbesondere also an der dem Öl zugewandten und/oder inneren Oberfläche, des Gehäuseteils Bereiche mit Vertiefungen, insbesondere voneinander regelmäßig beabstandeten Vertiefungen, ausgebildet sind, insbesondere wobei die Wandstärke in dem oder den Bereichen synchron mit den Vertiefungen variiert.

Von Vorteil ist dabei, dass durch die Vertiefungen die Innenfläche vergrößert wird und somit der Wärmeübergangswiderstand vom Öl zum Gehäuse verringert wird. Außerdem ist durch die glatte, insbesondere ebene Außenfläche zwar die Wandstärke nicht konstant, aber die Wärmekapazität zum Aufspreizen der in das Gehäuse eingeströmten Wärme vergrößert. Auf diese Weise ist also ein schnelles Aufspreizen des Wärmestroms und danach Abströmen in die Umgebung ermöglicht.

Außerdem strömt das Öl bei Betrieb des Getriebes an den Vertiefungen und auch senkrecht oder quer zu den Vertiefungen. Auf diese Weise wird die Strömung des Öls turbulent und somit der Wärmeübergangswiderstand vom Öl zum Gehäuse verringert.

Bei einer vorteilhaften Ausgestaltung erstreckt sich jede der Vertiefungen dabei senkrecht zur axialen Richtung, also senkrecht zur Drehachse der eintreibenden Welle, mehr als in axialer Richtung. Von Vorteil ist dabei, dass bei vertikal ausgerichteter eintreibender Welle nach dem Hochspritzen, in vertikaler Richtung abströmendes Öl quer zu den Vertiefungen strömt und somit turbulent strömt.

Bei einer vorteilhaften Ausgestaltung sind der oder die Bereiche unterhalb des Ölpegels des Öls angeordnet, insbesondere sind unterhalb des sich bei Stillstand des Getriebes einstellenden Ölpegels angeordnet. Von Vorteil ist dabei, dass die Wärme aus dem Ölsumpf möglichst effizient und schnell über das Gehäuse an die Umgebung abführbar ist.

Bei einer vorteilhaften Ausgestaltung sind in zweiten Bereichen an der Außenseite des Gehäuseteils regelmäßig voneinander beabstandete Vertiefungen ausgebildet und in diesen zweiten Bereichen ist die Wandstärke konstant,
insbesondere wobei auch an der Innenseite des Gehäuseteils regelmäßig voneinander beabstandete Vertiefungen ausgebildet sind, die derart von den an der Außenseite des Gehäuseteils ausgebildeten regelmäßig voneinander beabstandete Vertiefungen beabstandet sind, dass die Wandstärke konstant ist. Von Vorteil ist dabei, dass einerseits eine Oberflächenvergrößerung ausgeführt ist und andererseits ein herstellerkennzeichnendes Design am Gehäuse erkennbar ausbildbar ist.

Vorzugsweise sind die zweiten Bereiche oberhalb des Ölsumpfes, also oberhalb des bei Stillstand sich einstellenden Ölpegels, angeordnet.

Bei einer vorteilhaften Ausgestaltung erstreckt sich in den zweiten Bereichen jede der Vertiefungen senkrecht zur axialen Richtung, also senkrecht zur Drehachse der eintreibenden Welle, mehr als in axialer Richtung. Von Vorteil ist dabei, dass die Vertiefungen länglich ausgeformt sind und somit eine turbulente Strömung von nicht parallel zur jeweiligen Vertiefung sich bewegenden Öl ausbildbar ist.

Bei einer vorteilhaften Ausgestaltung ist mit dem Gehäuseteil ein Getriebedeckel verbunden, insbesondere öldicht verbunden, wobei das Gehäuseteil zusammen mit dem Getriebedeckel das Öl begrenzen,
wobei zumindest an einem Bereich des Getriebedeckels an der Außenseite des Getriebedeckels regelmäßig voneinander beabstandete Vertiefungen ausgebildet sind und in diesem Bereich die Wandstärke konstant ist,
insbesondere wobei auch an der Innenseite des Getriebedeckels regelmäßig voneinander beabstandete Vertiefungen ausgebildet sind, die derart von den an der Außenseite des Getriebedeckels ausgebildeten regelmäßig voneinander beabstandete Vertiefungen beabstandet sind, dass die Wandstärke konstant ist. Von Vorteil ist dabei, dass die vergrößerte Wärmekapazität ein schnelles Aufspreizen des Wärmestroms im Gehäuse ermöglicht und außerdem temperaturspitzen besser glättbar sind.

Bei einer vorteilhaften Ausgestaltung sind an der Innenseite des Getriebedeckels Versteifungsrippen ausgeformt, die sich gegenseitig kreuzen,
insbesondere wobei zwischen den Versteifungsrippen jeweilige Vertiefungen und Erhebungen ausgebildet sind. Von Vorteil ist dabei, dass an den Versteifungsrippen vorbeiströmendes Öl turbulent strömt.

Bei einer vorteilhaften Ausgestaltung schwankt die Wandstärke des Getriebedeckels entlang einer ersten der Versteifungsrippen periodisch, insbesondere entlang einer Richtung, in welcher die erste Versteifungsrippe am weitesten ausgedehnt ist,
wobei die Innenseite der ersten Versteifungsrippe und glatt, insbesondere eben, ausgeführt ist. Von Vorteil ist dabei, dass die Versteifungsrippe eine hohe Wärmekapazität hat und somit ein Aufspreizen des Wärmestroms ermöglicht.

Bei einer vorteilhaften Ausgestaltung gleicht die räumliche Periodenlänge des Verlaufs der Wandstärke im ersten Bereich des Gehäuseteils der räumlichen Periodenlänge des Verlaufs der Wandstärke im zweiten Bereich und/oder gleicht der räumlichen Periodenlänge des Verlaufs der Wandstärke entlang der ersten der Versteifungsrippe des Getriebedeckels. Von Vorteil ist dabei, dass durch den synchronen Verlauf, also den periodischen Verlauf mit konstantem Phasen Bezug, die Wandstärke konstant ausführbar ist.

Bei einer vorteilhaften Ausgestaltung weist der Getriebemotor ein Getriebe, einen Elektromotor und einen Adapterflansch, insbesondere einen zwischen dem Getriebe und dem Elektromotor angeordnetem Adapterflansch, auf,
wobei der Adapterflansch einen zur Drehachse einer eintreibenden Welle des Getriebes rotationssymmetrisch ausgeformten, ringförmigen Grundkörper aufweist, an welchem ein Axialvorsprung angeformt ist,
wobei der Axialvorsprung auf der vom Elektromotor abgewandten Seite des Adapterflansches angeordnet ist,
   - wobei der vom Gehäuseteil überdeckte Radialabstandsbereich in einem von dem Axialvorsprung nicht überdeckten Umfangswinkelbereich mit dem vom Axialvorsprung überdeckten Radialabstandsbereich überlappt,
      wobei der vom Gehäuseteil in axialer Richtung überdeckte Bereich mit dem von dem Axialvorsprung in axialer Richtung überdeckten Bereich überlappt, insbesondere in dem von dem Axialvorsprung nicht überdeckten Umfangswinkelbereich und in dem vom Axialvorsprung überdeckten Radialabstandsbereich,
      mit dem vom Axialvorsprung überdeckten Radialabstandsbereich überlappt,
      insbesondere wobei die axiale Richtung parallel zur Drehachse der eintreibenden Welle ausgerichtet ist, der Radialabstand der Abstand zur Drehachse der eintreibenden Welle ist und/oder die Umfangsrichtung sich auf diese Drehachse der eintreibenden Welle bezieht,
   - oder wobei der Axialvorsprung in Umfangsrichtung unterbrochen ausgeführt ist und das Gehäuseteil in den unterbrochenen Bereich hineinragt.

Von Vorteil ist dabei, dass der Axialvorsprung zwar einerseits zur zentrierenden Verbindung mit dem Elektromotor und dem Getriebe geeignet ausgeführt ist, aber andererseits möglichst kompakt ausgeführt ist. Denn die Zentrierung erfordert zumindest auch eine zylindrische fein bearbeitete Fläche, an welcher die Ausrichtung erfolgt. Erfindungsgemäß ist aber die zylindrische Fläche in Umfangsrichtung unterbrochen, also nicht vollständig umlaufend ausgeführt. Somit ist dieser unterbrochene Bereich von einem Teilbereich des Gehäuseteils nutzbar, welches das größte Verzahnungsteil des Getriebes, also das mit der abtreibenden Welle drehfest verbunden Zahnrad, gehäusebildend umgibt.

Vorzugsweise beträgt der unterbrochene Umfangswinkelbereich weniger als 180°.

Ein weiterer Vorteil ist, dass der Adapterflansch zum Elektromotor hin einen anderen Flanschverbindungstyp, nämlich Rundflansch, als zum Getriebe hin, beispielsweise Quadratflansch, aufweist. Auch die Bohrbilder sind entsprechend verschieden verwendbar. Zum Getriebe hin ist beispielsweise ein rechteckiges und zum Motor hin ein polygonales, also einen Kreis besser annäherndes, Bohrbild anwendbar.

Dabei darf sogar der von dem von den Bohrungen des zum Elektromotor hin gewandten Bohrbildes überdeckte Radialabstandsbereich mit dem von den Bohrungen des zum Getriebe hin gewandten Bohrbildes überdeckte Radialabstandsbereich überlappen. In Umfangsrichtung sind jedoch alle Bohrungen der beiden Bohrbilder voneinander beabstandet. Die Bohrungen beider Bohrbilder sind vorzugsweise durchgehend durch den Adapterflansch ausgeführt.

Das erste, insbesondere das zum Getriebe hin gewandte und verwendete, Bohrbild ist nur in dem von dem Axialvorsprung überdeckten Umfangswinkelbereich angeordnet. Das zweite, insbesondere das zum Elektromotor hin gewandte und verwendete, Bohrbild überlappt auch mit dem von dem unterbrochenen Bereich des Axialvorsprungs überdeckten Umfangswinkelbereich. Somit sind die Symmetrieachsen der diskreten Drehsymmetrieen der beiden Bohrbilder nicht deckungsgleich, sondern voneinander beabstandet. Auf diese Weise ist der Adapterflansch besonders kompakt ausführbar. Denn durch die Beabstandung der Symmetrieachsen ist der unterbrochene Bereich zwischen dem ringförmigen Grundkörper des Adapterflansches und Gehäuseteil des Getriebes erst bereitstellbar.

Bei einer vorteilhaften Ausgestaltung ist der Adapterflansch zum Elektromotor hin mit einem Rundflansch verbunden und zum Getriebe hin mit einem Rechteckflansch oder Quadratflansch verbunden. Von Vorteil ist dabei, dass verschiedene Flanschtypen mit entsprechend verschiedenen Bohrbildern und Zentrierflächen vorsehbar sind.

Bei einer vorteilhaften Ausgestaltung weist der Adapterflansch auf seiner dem Elektromotor zugewandten Seite erste, axial gerichtete Bohrlöcher auf, durch welche Verbindungselemente, wie Gewindestangen oder Schrauben, hindurchragen, die auch durch einen Lagerflansch des Elektromotors hindurchragen,
wobei das Bohrbild der ersten Löcher bezogen auf die Drehachse der eintreibenden Welle eine diskrete Drehsymmetrie, insbesondere eine mehr als sechszählige Drehsymmetrie, aufweist. Von Vorteil ist dabei, dass die Drehachse der Rotorwelle des Elektromotors zum Adapterflansch mittig, insbesondere zentrisch, ausgerichtet ist. Somit ist eine stabile Befestigung des Adapterflansches ermöglicht.

Bei einer vorteilhaften Ausgestaltung weist der Adapterflansch auf seiner dem Getriebe zugewandten Seite zweite, axial gerichtete Bohrlöcher auf, welche durch den Axialvorsprung des Adapterflansches und den ringförmigen Ringkörper des Adapterflansches durchgehen,
wobei durch die zweiten Bohrlöcher Verbindungselemente, wie Gewindestangen oder Schrauben, hindurchragen und in in das Gehäuseteil eingebrachte Gewindebohrungen eingeschraubt sind,
insbesondere wobei das Bohrbild der zweiten Bohrlöcher bezogen auf eine von der Drehachse der eintreibenden Welle beabstandete, zu dieser Drehachse parallel ausgerichtete Symmetrieachse eine diskrete Drehsymmetrie, insbesondere eine zweizählige Drehsymmetrie, aufweist. Von Vorteil ist dabei, dass der Getriebemotor kompakt ausführbar ist, da die mechanische getriebeseitige Schnittstelle, insbesondere Zentrierung und Befestigung, derart verschoben und angeordnet ist, dass ein unterbrochener Bereich des Axialvorsprungs vorsehbar ist und durch die Einhausung des mit der abtreibenden Welle verbundenen Verzahnungsteils zumindest teilweise befüllbar ist.

Bei einer vorteilhaften Ausgestaltung ist der Adapterflansch an einem Aufnahmeteil des Getriebes zentriert, insbesondere ist der Adapterflansch an dem Aufnahmeteil des Getriebes koaxial zur Drehachse der eintreibenden Welle ausgerichtet und zentriert ist,
wobei das Aufnahmeteil, insbesondere mittels eines zylindrischen Zentrierkragens, am Gehäuseteil des Getriebes ausgerichtet ist, insbesondere zentriert ist,
insbesondere wobei das Aufnahmeteil mittels Schrauben mit dem Gehäuseteil verbunden ist,
insbesondere wobei das Aufnahmeteil von Schraubenköpfen der in axial gerichtete Gewindebohrungen des Gehäuseteils eingeschraubten Schrauben zum Gehäuseteil hingedrückt gehalten ist. Von Vorteil ist dabei, dass der Adapterflansch am Aufnahmeteil zentriert ist, in welchem die Lager der eintreibenden Welle aufgenommen sind. Somit wird nicht das Gehäuseteil des Getriebes, sondern das Aufnahmeteil, welches die Lagerung aufnimmt, für die Zentrierung verwendet. Somit ist der Elektromotor mit seinem dem Adapterflansch zugewandten Lagerflansch am Adapterflansch zentriert, der wiederum am Aufnahmeteil zentriert ist, in welchem die Lager der eintreibenden Welle zentrisch aufgenommen sind. Auf diese Weise ist der Elektromotor, insbesondere dessen durch ein im Lagerflansch aufgenommenes Lager gelagerte Rotorwelle koaxial ausgerichtete zur eintreibenden Welle des Getriebes.

Bei einer vorteilhaften Ausgestaltung sind im Aufnahmeteil Lager aufgenommen, deren Innenringe auf die eintreibende Welle jeweils aufgesteckt sind.

Bei einer vorteilhaften Ausgestaltung ist der ringförmige Ringkörper in Umfangsrichtung vollständig umlaufend ausgebildet, insbesondere ununterbrochen ausgeformt sind. Von Vorteil ist dabei, dass eine hohe Stabilität erreichbar ist. Außerdem ist zu dem Elektromotor hin ein drehsymmetrisches Bohrbild vollständig vorsehbar, so dass im Bereich der Unterbrechung trotzdem der Elektromotor befestigbar ist. Auch das Getriebe ist unterbrechungsfrei befestigbar, da das Bohrbild im Axialvorsprung anordenbar ist und somit eine stabile Verbindung zwischen dem Adapterflansch und dem Gehäuseteil des Getriebes herstellbar ist.

Bei einer vorteilhaften Ausgestaltung weist der größte Wert des vom Axialvorsprung überdeckten Radialabstandbereichs als Funktion des Umfangswinkels vier lokale Maxima auf,
insbesondere wobei jeder von einem zweiten Bohrloch überdeckte Umfangswinkelbereich den zu einem jeweiligen lokalen Maximum gehörigen Umfangswinkel enthält. Von Vorteil ist dabei, dass die Bohrungen des dem Getriebe zugewandten Bohrbildes in den radial breiteren Bereichen des Axialvorsprungs angeordnet sind.

Bei einer vorteilhaften Ausgestaltung weist der Axialvorsprung eine zum Getriebe hin gewandte fein bearbeitete Fläche auf, deren kleinster Radialabstand in einem Teilbereich des vom Axialvorsprung überdeckten Umfangswinkelbereichs konstant ist,
insbesondere wobei der Teilbereich mehr als 80% des vom Axialvorsprung überdeckten Umfangswinkelbereichs überdeckt. Von Vorteil ist dabei, dass eine präzise Zentrierung ausführbar ist.

Bei einer vorteilhaften Ausgestaltung ist ein Deckelteil mit dem Aufnahmeteil verbunden, insbesondere mittels einer zwischengeordneten Dichtung, insbesondere Flachdichtung, dicht verbunden ist,
wobei im Deckelteil ein Wellendichtring aufgenommen ist, der zur eintreibenden Welle hin abdichtet, insbesondere dessen Dichtlippe auf einer an der eintreibenden Welle ausgebildeten Dichtfläche läuft. Von Vorteil ist dabei, dass der eintreibende Bereich, insbesondere die Lagerung der eintreibenden Welle öldicht abgeschlossen ist. Außerdem ist durch Aufsetzen und Verbinden des Deckelteils ein Wellendichtring aktiviert, der die Abdichtung weiter verbessert. Dabei weist das Deckelteil einen Zentrierkragen auf, mit welchem das Deckelteil an dem Aufnahmeteil ausrichtbar ist. Auf diese Weise ist der im Deckelteil aufgenommene Wellendichtring koaxial zentriert zu der eintreibenden Welle des Getriebes, obwohl die Lager im Aufnahmeteil aufgenommen sind und somit bei der Herstellung die Bearbeitung der Lagersitze in einem einzigen Arbeitsgang mit einer Werkzeugmaschine durchführbar ist.

Bei einer vorteilhaften Ausgestaltung sind ein Druckring und ein Klemmring auf die eintreibende Welle aufgesteckt, wobei der Druckring an einem ersten der Lager anliegt,
wobei der Klemmring kraftschlüssig mit der eintreibenden Welle verbunden ist,

insbesondere wobei axial gerichtete Schrauben am Klemmring abgestützt und in axial gerichtete Gewindebohrungen des Druckrings eingeschraubt, so dass die am Klemmring 50 abgestützten Schrauben den Druckring gegen das erste Lager drücken, insbesondere gegen den Innenring des ersten Lagers drücken. Von Vorteil ist dabei, dass eine einfache Anordnung zur Herstellung der Lagerspannung verwendbar ist.

Bei einer vorteilhaften Ausgestaltung ist ein Kegelritzel mit der eintreibenden Welle drehfest verbunden, das mit einem mit der Zwischenwelle drehfest verbundenen Kegelrad im Eingriff ist,
wobei ein schrägverzahntes Stirnrad mit der Zwischenwelle drehfest verbunden ist, das mit einem mit der abtreibenden Welle des Getriebes drehfest verbundenen Zahnrad im Eingriff ist,
insbesondere wobei eine von einer in die eintreibende Welle eingeschraubten Schraube formschlüssig gehaltene Scheibe das Kegelritzel in axialer Richtung begrenzt. Von Vorteil ist dabei, dass eine eintreibende Kegelgetriebestufe von einer Stirnradstufe gefolgt wird. Die Zahnräder der Stirnradstufe sind schrägverzahnt ausführbar. Somit ist ein geräuscharmer Betrieb erreichbar.

Weitere Vorteile ergeben sich aus den Unteransprüchen.

Die Erfindung wird nun anhand von schematischen Abbildungen näher erläutert:

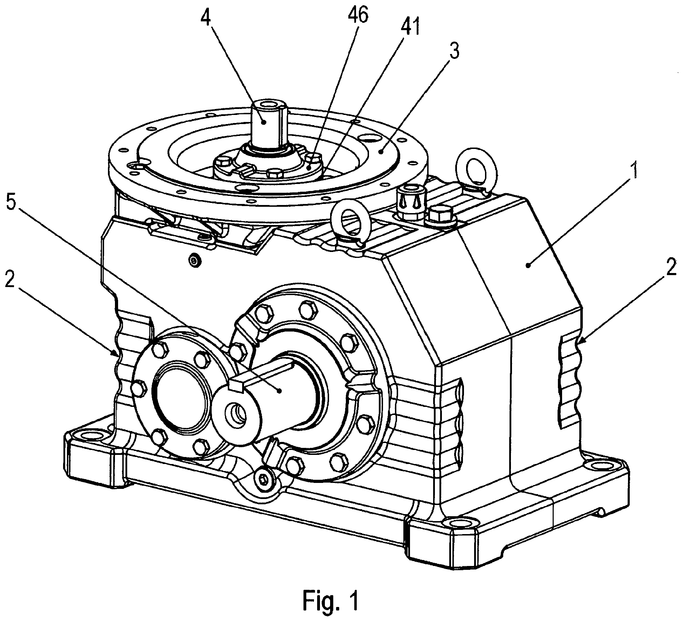

In der Figur 1 ist ein Getriebe mit einem Adapterflansch 3 zur Verbindung mit einem Elektromotor 120 in Schrägansicht dargestellt.

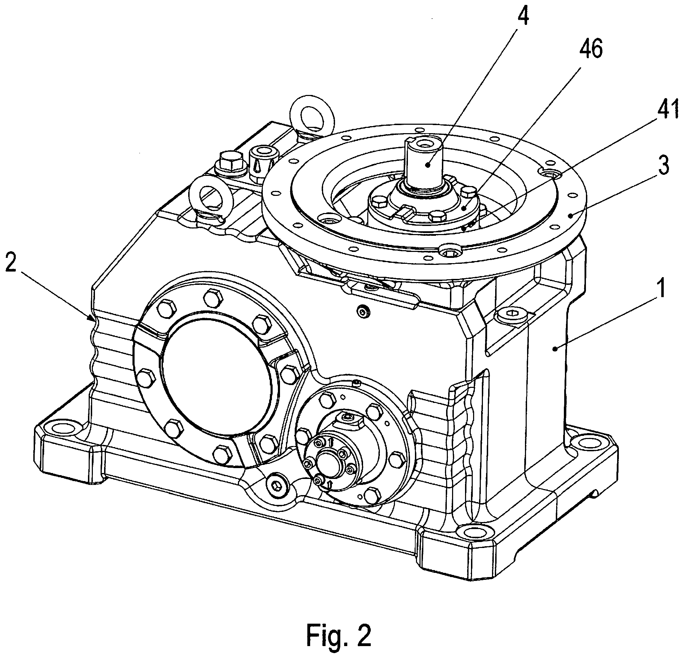

In der Figur 2 ist das Getriebe aus einer anderen Blickrichtung dargestellt.

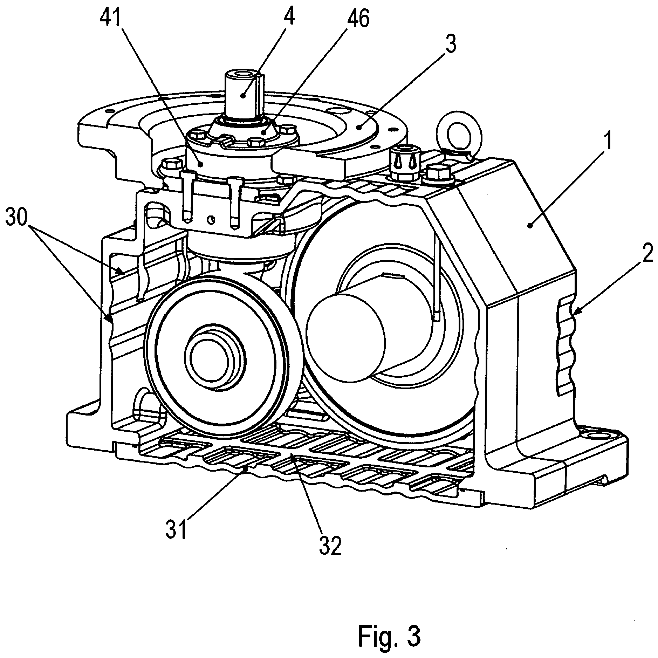

In der Figur 3 ist das Getriebe angeschnitten dargestellt.

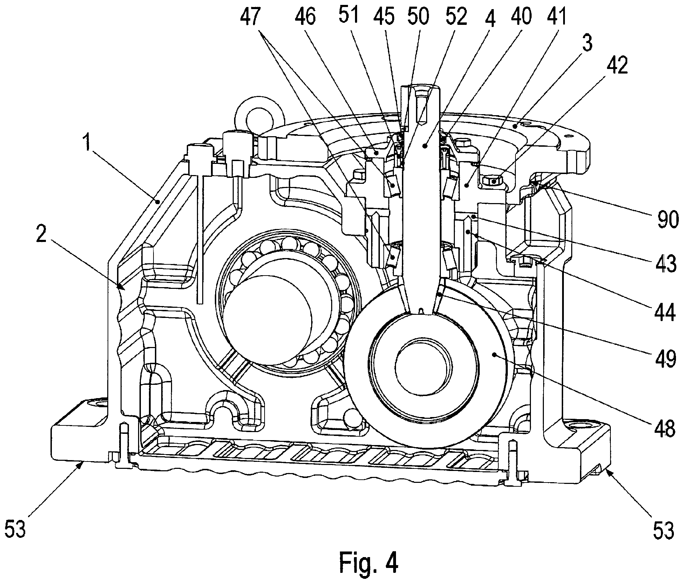

In der Figur 4 ist eine weitere Schnittansicht des Getriebes dargestellt.

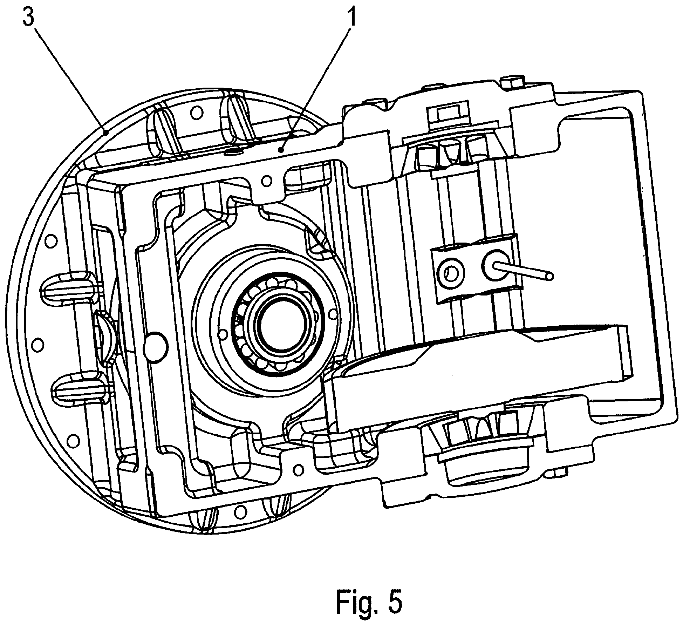

In der Figur 5 ist ein dazu senkrecht ausgeführter Schnitt des Getriebes dargestellt.

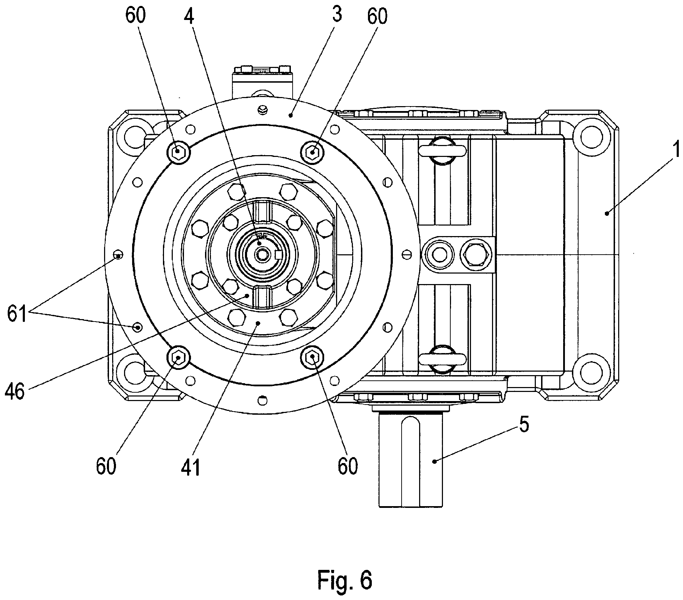

In der Figur 6 ist eine zur Figur 1 gehörige Draufsicht auf das Getriebe mit Adapterflansch 3 dargestellt.

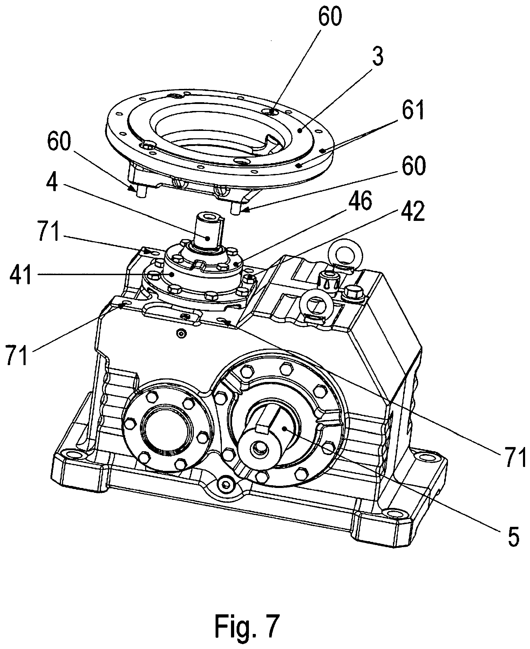

In der Figur 7 ist das Getriebe mit einem explodiert dargestellten Adapterflansch 3 in Schrägansicht ausgeführt.

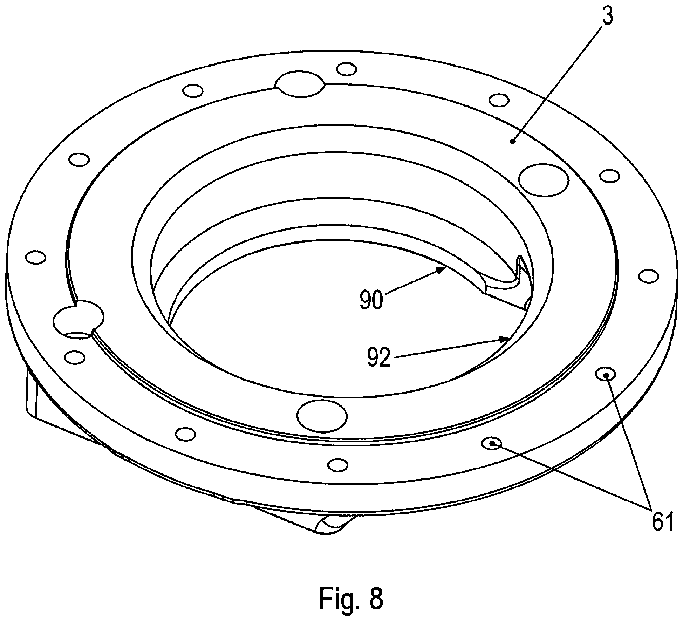

In der Figur 8 ist der Adapterflansch 3 aus einer ersten Blickrichtung in Schrägansicht dargestellt.

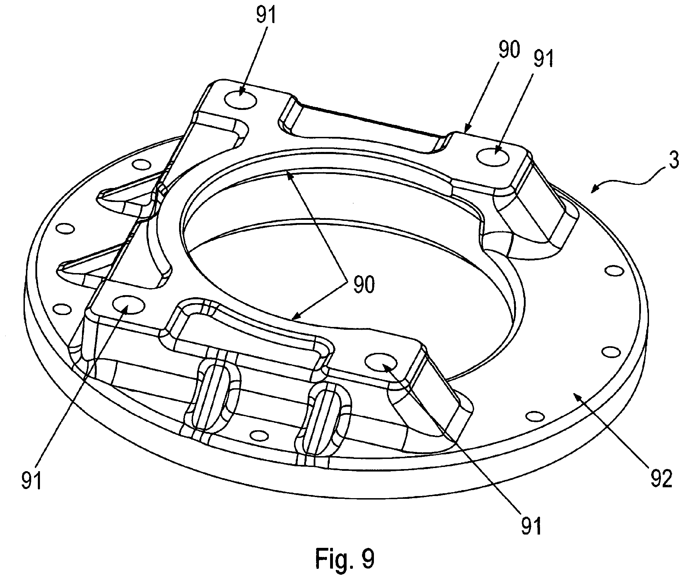

In der Figur 9 ist der Adapterflansch 3 aus einer zweiten Blickrichtung in Schrägansicht dargestellt.
In der Figur 10 ist eine Schnittansicht des Getriebes derart dargestellt, dass der eintreibende Bereich des Getriebes erkennbar ist.

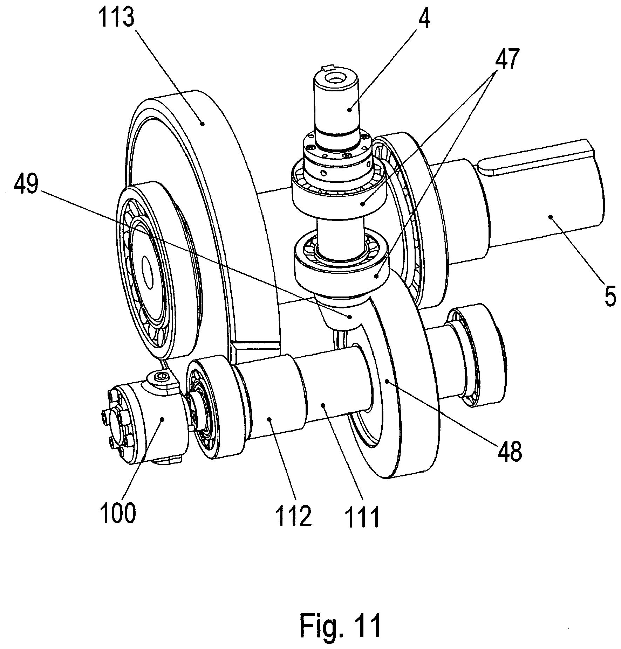

In der Figur 11 sind die Wellen, Verzahnungsteile und Lager des Getriebes in Schrägansicht dargestellt, wobei das Gehäuseteil 1 des Getriebes und das Schmieröl des Getriebes weggelassen wurde.

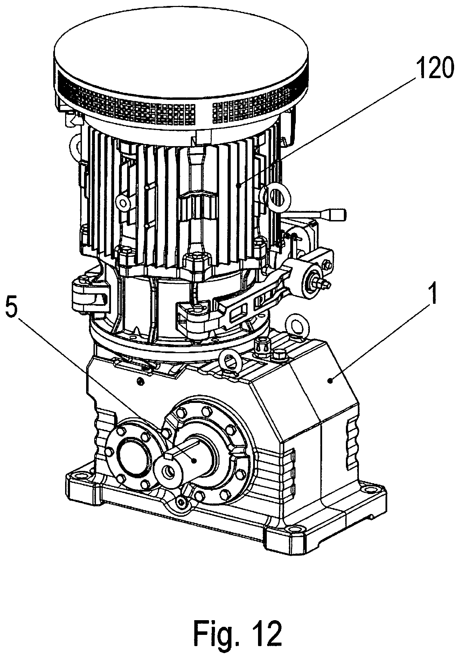

In der Figur 12 ist das mit einem Elektromotor 120 verbundene Getriebe in Schrägansicht dargestellt.

Wie in den Figuren dargestellt, wird zwischen dem Elektromotor 120 und dem Gehäuseteil 1 des Getriebes ein Adapterflansch 3 angeordnet, so dass der Elektromotor 120 am Adapterflansch zentrierbar ist und mittels Schrauben an den Adapterflansch 3 montierbar ist.

Der Adapterflansch 3 ist am Gehäuseteil 1 zentriert und mittels Schrauben mit dem Gehäuseteil 1 verbunden.

Der Adapterflansch 3 weist an seiner zum Elektromotor 120 hin gewandten Seite eine kreisrunde Außenform auf. Insbesondere ist der größte Außenumfang des Adapterflansches 3 kreisrund ausgeführt, insbesondere als zylinderförmige Außenkontur.

Die dem Motor 120 zugewandte mechanische Schnittstelle, insbesondere aufweisend einen Zentrierbund und ein Bohrbild, weist eine Drehsymmetrie auf, insbesondere bezogen auf die Drehachse der eintreibenden Welle 4. Die Drehsymmetrie ist mindestens diskret, kann aber auch kontinuierlich ausgeführt sein.

Radialabstände sind hier stets auf die Drehachse der eintreibenden Welle 4 bezogen. Ebenso ist die axiale Richtung parallel zu der Drehachse der eintreibenden Welle 4. Auch die Umfangsrichtung ist auf die Drehachse der eintreibenden Welle 4 bezogen.

Auf seiner dem Getriebegehäuse 1 zugewandten Seite weist der Adapterflansch 3 einen axial zum Gehäuseteil 1 hervorragenden Axialvorsprung 90 auf, der in Umfangsrichtung aber durch einen verdünnten Wandbereich 92 unterbrochen ist. Dabei weist der verdünnte Wandbereich 92 in axialer Richtung eine geringere Ausdehnung, insbesondere Wandstärke, auf als in dem von dem Axialvorsprung 90 überdeckten Umfangswinkelbereich.

Der Adapterflansch 3 weist also vorzugsweise einen ringförmigen Grundkörper auf, der rotationssymmetrisch zur Drehachse der eintreibenden Welle 4 des Getriebes ausgebildet ist und an dem der Axialvorsprung 90 getriebeseitig angeformt ist, der aber nicht rotationssymmetrisch ist, sondern in einem Umfangswinkelbereich unterbrochen ist. In diesen unterbrochenen Umfangswinkelbereich ragt das Gehäuseteil 1, insbesondere eine das abtreibende Zahnrad 113 zumindest teilweise gehäusebildend umgebende Aufwölbung des Gehäuseteils 1, hinein, wobei der vom Gehäuseteil 1 in diesem unterbrochenen Bereich, also in diesem Umfangswinkelbereich und in dem von dem Grundkörper in axialer Richtung überdeckten Bereich, überdeckte Radialabstandsbereich mit demjenigen Radialabstandsbereich überlappt, der vom Grundkörper überdeckt wird.

Somit ragt also das Gehäuseteil 1 in den unterbrochenen Bereich des Axialvorsprungs 90 hinein.

In dem Axialvorsprung 90 sind axial gerichtete Bohrlöcher 91 eingebracht, insbesondere die ein rechteckiges, insbesondere quadratisches, Bohrbild bilden.

Somit sind die Schrauben zur Verbindung des Gehäuseteils 1 mit dem Adapterflansch 3 in einer rechteckigen Anordnung vorgesehen.

Zum Getriebe hin ist also ein quadratischer Flansch verwendbar und zum Motor 120 hin ist ein Rundflansch verwendbar.

Der Axialvorsprung 90 überdeckt nur einen Teil des gesamten Umfangswinkelbereichs. Der maximal überdeckte Radialabstand als Funktion des Umfangswinkels weist vier lokale Maxima auf.

Der vom jeweiligen Bohrloch 91 überdeckte Umfangswinkelbereich enthält jeweils den Umfangswinkelwert eines jeweiligen der Maxima.

Somit ist das jeweilige Bohrloch 91 jeweils in einem radial verbreiterten Bereich des Axialvorsprungs 90 angeordnet.

Der Axialvorsprung 90 weist an seinem Innenumfang, also an seinem kleinsten Radialabstand einen innenzylindrischen Oberflächenbereich auf, der allerdings in dem nicht vom Axialvorsprung 90 überdeckten Umfangswinkelbereich unterbrochen ist.

Dieser Innenumfang fungiert als zentrierende Aufnahme für ein Aufnahmeteil 41 des Getriebes. Der innenzylindrische Oberflächenbereich ist koaxial zur Drehachse der eintreibenden Welle 4 ausgerichtet.

Außerdem wiest der Axialvorsprung eine fein bearbeitete, axial hervorstehende Kreisringfläche in dem vom Axialvorsprung 90 überdeckten Umfangswinkelbereich auf.

Mittels dieser Kreisringfläche wird der Adapterflansch 3 an fein bearbeitete ebene Flächenbereiche des Gehäuseteils 1 angelegt. Dabei ist in jede der fein bearbeiteten ebenen Flächenbereiche eine jeweilige axial gerichtete Bohrung, insbesondere Gewindebohrung, eingebracht, wobei Schrauben durch die Bohrlöcher 91 geführt sind und in die in die fein bearbeiteten ebenen Flächenbereiche des Gehäuseteils 1 eingebrachten Gewindebohrungen 71 eingeschraubt sind.

Die Kreisringfläche des Axialvorsprungs 90 und die Flächenbereiche, in welche die Bohrlöcher 91 eingebracht sind, befinden sich auf derselben axialen Position. Diese axiale Position ist die vom Elektromotor 120 am weitest entfernte, vom Adapterflansch 3 bedeckte Position.

Der verdünnte Wandbereich 92 des Adapterflansches 3 liegt auf einer Auswölbung, insbesondere Erhöhung, des Gehäuseteils 1 auf oder weist zumindest nur einen geringen Abstand auf. Diese Auswölbung umgibt ein mit der abtreibenden Welle verbundenes Zahnrad 113 zumindest teilweise gehäusebildend.

Die abtreibende Welle 5 ist senkrecht zur eintreibenden Welle 4 ausgerichtet.

Das mit der abtreibenden Welle 5 drehfest verbundene Zahnrad 113 zusammen mit der Auswölbung überdeckt in axialer Richtung, also in einer zur Drehachse der eintreibenden Welle senkrechten Richtung einen Bereich, welcher den von den Lagern 47 der eintreibenden Welle 4 überdeckten Bereich umfasst.

Der Elektromotor 120 weist ein Statorgehäuse auf, das axial beidseitig mit jeweils einem als Rundflansch ausgeführten Lagerflansch verbunden ist. Jeder der beiden Lagerflansche nimmt jeweils ein Lager auf, das auf die Rotorwelle des Elektromotors 120 aufgesteckt ist. Somit ist die Rotorwelle über die beiden in den Lagerflanschen aufgenommenen Lager drehbar gelagert.

Die beiden Lagerflansche sind als Rundflansch ausgeführt. Daher weisen sie einen im Wesentlichen kreisrunden Außenumfang auf. Das Bohrbild der für die Verbindungsschrauben zur Verbindung des ersten der beiden Lagerflansche mit dem Adapterflansch 3 weist eine diskrete Drehsymmetrie auf, wobei die Drehsymmetrieachse der Drehachse der Rotorwelle entspricht, insbesondere also der Drehachse der zur Rotorwelle koaxial angeordneten eintreibenden Welle 4. Der Adapterflansch 3 weist zum ersten Lagerflansch des Elektromotors 120 hin ebenfalls ein Bohrbild mit derselben diskreten Drehsymmetrie auf.

Die Lager 47 sind in einem Aufnahmeteil 41 aufgenommen, das einen nach radial außen hervorragenden, in Umfangsrichtung umlaufenden Kragen aufweist, welcher mittels Schrauben, die in axial gerichtete Gewindebohrungen des Gehäuseteils 1 eingeschraubt sind, an das Gehäuseteil 1 angepresst wird,

Dabei ist an diesem Kragen eine Stufe fein bearbeitet und somit zur Zentrierung am Gehäuseteil 1 geeignet ausgeführt.

Die Lager 47 sind auf die eintreibende Welle 4 aufgesteckt, die somit drehbar gelagert ist.

Ein Deckelteil 46 ist mittels in Gewindebohrungen des Aufnahmeteils 47 eingeschraubten Schrauben, insbesondere mittels der Schraubenköpfe dieser Schrauben, an das Aufnahmeteil 47 angedrückt. Im Deckelteil 46 ist ein Wellendichtring 45 aufgenommen, der das Deckelteil 46 zur eintreibenden Welle 4 hin abdichtet.

Auf der eintreibenden Welle 4 sind ein an einem ersten der Lager 47 anliegender Druckring 52 und ein Klemmring 50 aufgesteckt, wobei der Klemmring 50 kraftschlüssig mit der eintreibenden Welle 4 verbunden ist. Axial gerichtete Schrauben 51 sind am Klemmring 50 abgestützt und in axial gerichtete Gewindebohrungen des Druckrings 52 eingeschraubt, so dass die am Klemmring 50 abgestützten Schrauben den Klemmring 52 gegen da erste Lager 47 drücken. Insbesondere drückt hierbei der Druckring 52 auf den Innenring des ersten Lagers 47.

Die eintreibende Welle 4 ist durch das Deckelteil 46 durchgesteckt.

Die eintreibende Welle 4 ist drehfest mit einem Kegelritzel 49 verbunden, dessen Verzahnung mit der Verzahnung eines Rads 48, insbesondere Kegelrads, im Eingriff ist.

Der Außenring des ersten Lagers 47 ist gegen einen Absatz des Aufnahmeteils 41 angestellt.

Das Kegelritzel 49 ist auf einen Konusförmigen Endbereich der eintreibenden Welle 4 aufgesteckt und mittels einer Scheibe axial gesichert, die von einer in der Stirnseite der eintreibenden Welle 4 mittig eingeschraubten Schraube an die Stirnseite der eintreibenden Welle 4 angepresst wird. Außerdem ist das Kegelritzel 49 kraftschlüssig und/oder formschlüssig verbunden, insbesondere mittels Passfederverbindung.

Am Deckelteil 46 ist ein axial hervorragender, in Umfangsrichtung umlaufender Zentrierkragen ausgeformt, der an einem am Aufnahmeteil 41 ausgebildeten Zentriersitz ausgerichtet und zentriert ist.

Das Kegelritzel 49 ist im Eingriff mit der Verzahnung eines Rads 48, insbesondere Kegelrads.

Das Rad 48 ist drehfest mit einer Zwischenwelle 111 verbunden, die mittels im Gehäuseteil aufgenommener Lager drehbar gelagert ist und drehfest verbunden ist mit einer Verzahnung 112, die im Eingriff ist mit der Verzahnung eines Zahnrads 113, das drehfest mit der abtreibenden Welle 5 verbunden ist.

Somit weist das erfindungsgemäße, vorzugsweise zweistufige Getriebe eine eintreibende Kegelgetriebestufe auf, der eine abtreibend angeordnete Stirnradgetriebestufe folgt. Die Verzahnungen der Stirnradgetriebestufe weisen vorzugsweise jeweils einen nicht verschwindenden Schrägungswinkel auf.

Mit der Zwischenwelle 111 ist eine Wellenendpumpe 100 verbunden. Somit wird diese Wellenendpumpe zwar nicht von der schnell drehenden eintreibenden Welle 4 angetrieben, sondern von der Zwischenwelle 111, die aber immerhin schneller dreht als die abtreibende Welle 5.

Der Ölpegel des im Innenraum des Getriebes angeordneten Öls überdeckt oder erreicht die Ritzelverzahnung. Jedoch sind beide Lager 47 der eintreibenden Welle 4 oberhalb des Ölpegels angeordnet und somit nach langem Stillstand des Getriebes nicht geschmiert.

Sobald das Getriebe in Betrieb genommen wird, pumpt daher die von der Zwischenwelle 111 angetriebene Wellenendpumpe 100 Öl vom unterhalb des Ölpegels angeordnetem Ölsumpf zu einer oberhalb der Lager 47 angeordneten Position, so dass die Lager 47 geschmiert sind und auch der Wellendichtring 40 nicht trockenläuft.

Die eintreibende Welle 4 ist parallel zur Normalenrichtung der Oberfläche des Ölsumpfes ausgerichtete, insbesondere bei längerem Stillstand des Getriebes.

Die sonstigen Lager, Verzahnungen (112, 49) und Zahnräder (48, 113) sind stets zumindest teilweise in den Ölsumpf des Getriebes eingetaucht.

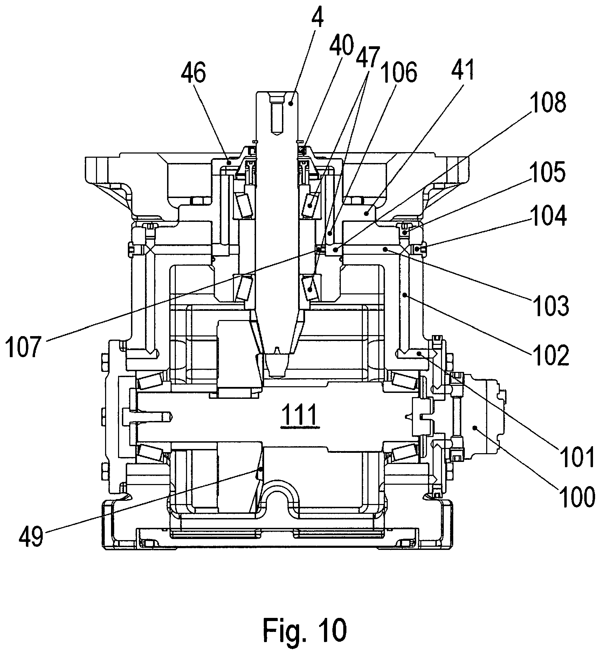

Wie in Figur 10 dargestellt, fördert die Wellendpumpe 100 Öl in eine radial gerichtete Bohrung 101 des Gehäuseteils 1. Diese ist als Sacklochbohrung von außen eingebracht und mündet in eine axial gerichtete Bohrung 102 des Gehäuseteils 1, welche ebenfalls von außen eingebracht ist, als Sacklochbohrung ausgeführt ist und an ihrem dem Elektromotor 120 zugewandten Ende mit einem Verschlussstopfen 105 verschlossen ist.

Eine durch das Gehäuseteil 1 durchgehende, radial gerichtete Bohrung 103 kreuzt die Bohrung 102 und mündet in eine in das Aufnahmeteil 41 eingebrachte, durch das Aufnahmeteil 41 durchgehende Radialbohrung 108, die zur eintreibenden Welle 4 hin mit einem Stopfen 107 verschlossen, der aber nicht vollständig dicht ist sondern eine geringe Ölmenge durchlässt, die dann in einem Spalt zwischen dem Gehäuseteil 1 und der eintreibenden Welle 4 zum unteren, also vom Elektromotor 120 weiter entfernteren Lager 47 gelangt.

Eine axial gerichtete, von außen ins Aufnahmeteil 41 eingebrachte Sacklochbohrung 106 mündet in die Radialbohrung 108, so dass das von der Wellenendpumpe 100 geförderte Öl am dem Deckelteil 46 zugewandten Ende des Aufnahmeteils 41 austritt und das obere, also dem Elektromotor 120 zugewandte Lager 47 mit Öl versorgt. Somit wird dann auch das unterhalb des ersten Lagers 47 angeordnete zweite Lager 47 versorgt.

Die beiden Lager 47 sind vorzugsweise als Schräglager ausgeführt.

Das mit dem Gehäuseteil 1 öldicht verbundene Aufnahmeteil 41 umgibt zusammen mit dem mit dem Aufnahmeteil 41 öldicht verbundenen Deckelteil 46 den Innenraumbereich des Getriebes.

Bei Betrieb des Getriebes und somit Drehbewegung der Zwischenwelle 111 wird von der Wellenendpumpe 100 Öl entgegen der Gravitationsrichtung gefördert und somit die Lager 47 mit Öl geschmiert. Außerdem nimmt das an den Lagern 47 vorbeiströmende Öl Verlustwärme auf, die danach vom Ölsumpf an die Umgebung abgeführt wird.

Um einen möglichst geringen Wärmeübergangswiderstand vom Ölsumpf zur Umgebung oder zumindest zum Gehäuseteil 1 hin zu erreichen, sind an der Innenseite des Gehäuseteils 1 Bereiche mit insbesondere voneinander regelmäßig beabstandeten Vertiefungen 30 ausgebildet.

In diesen Bereichen ist die Wandstärke vorzugsweise nicht konstant, sondern die Bereiche sind an ihrer Außenseite glatt, insbesondere eben, ausgeführt.

Somit variiert die Wandstärke in diesen Bereichen synchron mit den Vertiefungen 30.

Jede der Vertiefungen 30 erstreckt sich dabei senkrecht zur axialen Richtung, also senkrecht zur Drehachse der eintreibenden Welle 4, mehr als in axialer Richtung.

Vorzugsweise sind die Vertiefungen 30 unterhalb des Ölpegels angeordnet und bieten somit an der Innenseite eine vergrößerte Oberfläche, so dass der Wärmeübergangswiderstand vom Öl zum Gehäuseteil 1 verringert wird und die Wärme in den zwischen den Vertiefungen 30 angeordneten, insbesondere durch die ebene Ausführung des jeweiligen Bereichs an der Außenseite, verdickten Zonen aufnehmbar, insbesondere infolge der durch die Verdickung erzeugten größeren Wärmekapazität. Von dort wird die Wärme dann im Gehäuseteil 1 aufgespreizt und an die Umgebung abgeleitet.

In weiteren Bereichen sind an der Außenseite des Gehäuseteils Vertiefungen 2 vorgesehen, wobei in diesen weiteren Bereichen die Wandstärke konstant ist. Somit sind nicht nur an der Außenseite insbesondere voneinander regelmäßig beabstandete Vertiefungen 2 sondern auch an der Innenseite entsprechende Vertiefungen ausgeformt.

Jede der Vertiefungen 2 erstreckt sich dabei ebenfalls senkrecht zur axialen Richtung, also senkrecht zur Drehachse der eintreibenden Welle 4, mehr als in axialer Richtung.

Somit sind die Vertiefungen 2 zur Erreichung eines besonderen, Herkunft-kennzeichnenden Designeindrucks am Gehäuseteil 1 ausformbar. Hingegen dienen die nur an der Innenseite ausgeprägten Vertiefungen 30 nicht dem Designeindruck, sondern der Verbesserung der Wärmeableitung.

An der Unterseite des Getriebes ist der Innenraum des Getriebes mittels eines Getriebedeckels 31 verschlossen, der ebenfalls Vertiefungen 2 mit konstanter Wandstärke aufweist, wobei aber an der Innenseite des Getriebedeckels Versteifungsrippen 32 ausgeformt sind, die sich gegenseitig kreuzen. Somit ist der Getriebedeckel 31 einerseits steif und vermittelt auch einen herkunfts-kennzeichnenden Designeindruck, wobei somit die Unterseite des Ölsumpfes beruhigt wird, da das strömende Öl nicht nur die Versteifungsrippen 32 überwinden, sondern auch zwischen den Versteifungsrippen 32 die Vertiefungen und Erhebungen überwinden muss. Somit bildet sich eine weniger laminare und mehr turbulente Strömung im Ölsumpf aus, wenn das Öl bewegt wird. Dadurch ist ebenfalls der Wärmetransport vom Öl zum Getriebedeckel 31 verbessert.

Im Aufnahmeteil 41 ist eine in Umfangsrichtung von der Radialbohrung 108 beabstandete durch das Aufnahmeteile 41 durchgehende Radialbohrung 43 angeordnet, in welche eine ins Aufnahmeteil eingebrachte, axial gerichtete Sacklochbohrung mündet, die zum Ölsumpf hin aus dem Aufnahmeteil 41 austritt. Somit ist eine Ölabführung aus dem Raumbereich zwischen der eintreibenden Welle und dem Aufnahmeteil ermöglicht. Insbesondere bei Überdruck in diesem Bereich fungiert diese Ölabführung als Druckentlastung.

Nach radial außen hin ist Radialbohrung 43 mittels des Gehäuseteils 1 verschlossen, in welches das Aufnahmeteil 41 hineinragt. Spiegelsymmetrisch zu einer die Drehachse der eintreibenden Welle enthaltenden Symmetrieebene weist das Aufnahmeteil 41 eine weitere solche Druckentlastung auf.

Auf diese Weise weist also das Aufnahmeteil 41 an derselben axialen Position vier in Umfangsrichtung voneinander beabstandete durch das Aufnahmeteil durchgehende Radialbohrungen auf

### Bezugszeichenliste

- 1: Gehäuseteil
- 2: Vertiefungen
- 3: Adapterflansch
- 4: eintreibende Welle
- 5: abtreibende Welle
- 30: Vertiefungen
- 31: Getriebedeckel
- 32: Versteifungsrippen
- 40: Wellendichtring
- 41: Aufnahmeteil
- 42: Schaube
- 43: Radialbohrung
- 44: Axialbohrung
- 45: Wellendichtring
- 46: Deckelteil
- 47: Lager, insbesondere Schrägrollenlager
- 48: Rad, insbesondere Kegelrad
- 49: Kegelritzel
- 50: Klemmring
- 51: Schrauben
- 52: Druckring
- 53: Fußbereich
- 60: Schraube
- 61: erste Bohrlöcher
- 71: Bohrung, insbesondere Gewindebohrung.
- 90: Axialvorsprung
- 91: zweites Bohrloch
- 92: verdünnter Wandbereich
- 100: Wellenendpumpe
- 101: Radialbohrung
- 102: Axialbohrung
- 103: Radialbohrung
- 104: Verschlussstofpen
- 105: Verschlussstopfen
- 106: Axialbohrung
- 107: Stopfen
- 108: Radialbohrung
- 111: Zwischenwelle
- 112: Verzahnung
- 113: Zahnrad
- 120: Elektromotor

## Patentansprüche

1. Getriebemotor mit Getriebe, welches eine eintreibende Welle (4) und ein Gehäuse aufweist, das ein Gehäuseteil (1), ein Aufnahmeteil (41) und ein Deckelteil (46), insbesondere sowie einen Getriebedeckel (31), aufweist, wobei das Gehäuse Verzahnungsteile und Öl zumindest teilweise gehäusebildend umgibt,
**wobei** mit der eintreibenden Welle (4) ein Kegelritzel (49) drehfest verbunden ist, das mit einem mit der Zwischenwelle (111) drehfest verbundenen Rad (48), insbesondere Kegelrad, im Eingriff ist,
wobei ein erstes schrägverzahntes Stirnrad (112) mit der Zwischenwelle (111) drehfest verbunden ist, das mit einem mit der abtreibenden Welle (5) des Getriebes drehfest verbundenen Zahnrad (113), insbesondere zweites schrägverzahntes Stirnrad, im Eingriff ist, insbesondere wobei die Drehachse der eintreibenden Welle (4) senkrecht zur Drehachse der Zwischenwelle (111) ausgerichtet ist, wobei die Drehachse der Zwischenwelle (111) parallel ausgerichtet ist zur Drehachse der abtreibenden Welle (5),
**dadurch gekennzeichnet, dass**
**eine von einer in die eintreibende Welle (4) eingeschraubten Schraube** (42, 60) **formschlüssig**
**gehaltene Scheibe das Kegelritzel** (49) **in axialer Richtung begrenzt,**
**wobei das Kegelritzel** (49) **auf einen konisch geformten Bereich der eintreibenden Welle (4) aufgesteckt ist, wobei**
**wobei der konische Bereich am äußersten axialen Endbereich der Welle (4) ausgebildet ist und das Kegelritzel** (49) **derart aufgesteckt ist, dass die Stirnfläche der Welle (4) diejenige axiale Position ist, an welcher das Kegelritzel von der Scheibe begrenzt wird,**
**wobei die Scheibe an der axialen Position der Stirnfläche der eintreibenden Welle (4) in radialer Richtung übersteht.**

2. Getriebemotor nach Anspruch 1,
**dadurch gekennzeichnet, dass**
das Kegelritzel formschlüssig mit der eintreibenden Welle (4) verbunden ist, insbesondere mittels Passfederverbindung,
**und**/dass
das Kegelritzel kraftschlüssig mit der eintreibenden Welle (4) verbunden ist, insbesondere mittels Klebeverbindung.

3. Getriebemotor nach einem der vorangegangenen Ansprüche,
**dadurch gekennzeichnet, dass**
am Gehäuseteile Fußbereiche (53) zum Aufstellen und Befestigen des Getriebes auf einer Bodenfläche, insbesondere auf einer an einer Maschine oder Anlage ausgebildeten Montagefläche, ausgeformt sind,
wobei die Bodenfläche im Wesentlichen als Ebene ausgebildet ist, wobei die Normale der Ebene parallel zur Drehachse der eintreibenden Welle (4) und senkrecht zur Drehachse der Zwischenwelle (111) ausgerichtet ist,
wobei die Fußbereiche und/oder die Ebene auf der von der eintreibenden Welle (4) abgewandten Seite des mit der Zwischenwelle (111) drehfest verbundenen Rads, insbesondere Kegelrads, angeordnet ist oder sind.

## Claims

1. A geared motor with a gear unit which has an input shaft (4) and a housing which has a housing part (1), a receiving part (41) and a cover part (46), in particular and also a gear unit cover (31), wherein the housing surrounds toothed parts and oil at least partially in a housing-forming manner,
wherein there is connected non-rotatably to the input shaft (4) a bevel pinion (49) which is engaged with a wheel (48), in particular bevel wheel, connected non-rotatably to the intermediate shaft (111),
wherein a first helical spur gear (112) is connected non-rotatably to the intermediate shaft (111), which spur gear is engaged with a gear wheel (113), in particular second helical spur gear, connected non-rotatably to the output shaft (5) of the gear unit,
in particular wherein the axis of rotation of the input shaft (4) is oriented perpendicularly to the axis of rotation of the intermediate shaft (111), wherein the axis of rotation of the intermediate shaft (111) is oriented parallel to the axis of rotation of the output shaft (5),
**characterised in that**
a disc held in a form-fit by a screw (42, 60) screwed into the input shaft (4) limits the bevel pinion (49) in the axial direction,
the bevel pinion (49) being mounted on a conically shaped region of the input shaft (4), wherein
the conical region being formed on the outermost axial end region of the shaft (4) and the bevel pinion (49) being mounted such that the end face of the shaft (4) is that axial position at which the bevel pinion is limited by the disc,
the disc projecting in the radial direction at the axial position of the end face of the input shaft (4).

2. A geared motor according to claim 1,
**characterised in that**
the bevel pinion is connected in a form-fit to the input shaft (4), in particular by means of a feather-key connection,
and **in that**
the bevel pinion is connected in a force-fit to the input shaft (4), in particular by means of an adhesive join.

3. A geared motor according to one of the preceding claims,
**characterised in that**
on the housing parts there are formed foot regions (53) for erecting and fastening the gear unit on a base face, in particular on a mounting face formed on a machine or installation,
the base face being configured substantially as a plane, the normal of the plane being oriented parallel to the axis of rotation of the input shaft (4) and perpendicularly to the axis of rotation of the intermediate shaft (111),
the foot regions and/or the plane being arranged on that side, which faces away from the input shaft (4), of the wheel, in particular bevel wheel, which is connected non-rotatably to the intermediate shaft (111).

## Revendications

1. Motoréducteur avec transmission, présentant un arbre d'entrée (4) et un carter présentant une partie carter (1), une partie logement (41) et une partie couvercle (46), et en particulier un couvercle de transmission (31), le carter entourant des parties denture et de l'huile de manière à former au moins partiellement un carter,
un pignon conique (49) en prise avec une roue (48), en particulier une roue conique, reliée de manière solidaire en rotation à l'arbre intermédiaire (111) étant relié de manière solidaire en rotation à l'arbre d'entrée (4),
une première roue droite à denture hélicoïdale (112), en prise avec une roue dentée (113), en particulier une deuxième roue droite à denture hélicoïdale, reliée de manière solidaire en rotation à l'arbre de sortie (5) de la transmission, étant reliée de manière solidaire en rotation à l'arbre intermédiaire (111),
l'axe de rotation de l'arbre d'entrée (4) étant en particulier orienté perpendiculairement à l'axe de rotation de l'arbre intermédiaire (111), l'axe de rotation de l'arbre intermédiaire (111) étant orienté parallèlement à l'axe de rotation de l'arbre de sortie (5),
**caractérisé en ce que**
un disque, retenu de manière à être verrouillé par complémentarité de forme grâce à une vis (42, 60) vissée dans l'arbre d'entrée (4), limite le pignon conique (49) dans la direction axiale,
le pignon conique (49) étant emboîté dans une région de forme conique de l'arbre d'entrée (4),
la région conique étant formée au niveau de la région d'extrémité la plus axiale de l'arbre (4) et le pignon conique (49) étant emboîté de telle manière que la surface frontale de l'arbre (4) correspond à la position axiale au niveau de laquelle le pignon conique est limité par le disque,
le disque faisant saillie dans la direction radiale au niveau de la position axiale de la surface frontale de l'arbre d'entrée (4).

2. Motoréducteur selon la revendication 1,
**caractérisé en ce que**
le pignon conique est relié avec verrouillage par complémentarité de forme à l'arbre d'entrée (4), en particulier au moyen d'une liaison à clavette,
et **en ce que**
le pignon conique est relié avec verrouillage par complémentarité de force à l'arbre d'entrée (4), en particulier au moyen d'une liaison adhésive.

3. Motoréducteur selon l'une quelconque des revendications précédentes,
**caractérisé en ce que**
des régions de piétement (53) permettant une mise en place et une fixation de la transmission sur une surface de sol, en particulier sur une surface de montage formée au niveau d'une machine ou d'une installation, sont formées au niveau des parties carter,
la surface de sol étant conçue essentiellement sous la forme d'un plan, la normale du plan étant orientée parallèlement à l'axe de rotation de l'arbre d'entrée (4) et perpendiculairement à l'axe de rotation de l'arbre intermédiaire (111),
les régions de piétement et/ou le plan étant agencé(s) sur le côté, opposé à l'arbre d'entrée (4), de la roue, en particulier de la roue conique, reliée de manière solidaire en rotation à l'arbre intermédiaire (111).
